# EUROPÄISCHE PATENTANMELDUNG

(11) **EP 1 849 543 A2**
(43) Veröffentlichungstag der Anmeldung: **31.10.2007**
(21) Anmeldenummer: 07007379.6
(22) Anmeldetag: 11.04.2007
(51) Int. Cl.: B23B 29/034, B23P 9/02

(54) **Vorrichtung zum Bearbeiten von Oberflächen eines Werkstückes mittels mindestens eines Glättwerkzeuges**

(30) Priorität: 29.04.2006 DE 102006019980
(71) Anmelder: Baublies AG, 71272 Renningen (DE)
(72) Erfinder: Kappel, Thomas, 71263 Weil der Stadt (DE)
(74) Vertreter: Bartels, Martin Erich Arthur

(57) **Zusammenfassung**

Eine Vorrichtung zum Bearbeiten von Oberflächen eines Werkstückes (11) mittels mindestens eines Glättwerkzeuges (17), das von einem Bearbeitungshalter (7) getragen ist, welcher für die bei einer relativen Drehbewegung zwischen Werkstück (11) und Bearbeitungshalter (7) erfolgende Oberflächenbearbeitung gegenüber einer vorgebbaren Vorschubrichtung (3) auslenkbar ist, ist dadurch gekennzeichnet, dass am Bearbeitungshalter (7) außer dem Glättwerkzeug (17) mindestens ein Schneidwerkzeug (13) zur spanenden Formgebung der durch das Glättwerkzeug (17) zu bearbeitenden Oberfläche (15) vorhanden ist.

## Beschreibung

Die Erfindung betrifft eine Vorrichtung zum Bearbeiten von Oberflächen eines Werkstückes mittels mindestens eines Glättwerkzeuges, das von einem Bearbeitungshalter getragen ist, welcher für die bei einer relativen Drehbewegung zwischen Werkstück und Bearbeitungshalter erfolgende Oberflächenbearbeitung gegenüber einer vorgebbaren Vorschubrichtung auslenkbar ist.

Rotationsflächen in Werkstücken, beispielsweise Wandteile in Bohrungen, die durch spanende Formgebung bei einer Drehbearbeitung erzeugt werden, sind hinsichtlich der Oberflächenqualität (Rauheit, Festigkeit) häufig nicht zufriedenstellend. In solchen Fällen erfolgt im Allgemeinen eine spanlose Bearbeitung der Oberfläche durch Glattwalzen und/oder Festwalzen. Dies kann bei "einfachen" zylindrischen oder konischen Geometrien der Wandteile meist ohne größere Schwierigkeiten durch rollierende Werkzeuge geschehen, wobei mehrrollige Werkzeuge zum Einsatz kommen können. Eine diesbezügliche spanlose Nachbearbeitung gestaltet den Fertigungsprozess umständlich und zeitraubend, insbesondere, wenn es sich um komplexe Geometrien, beispielsweise mit zusammengesetzten Konturen aus Konen, Zylindern und Übergangsradien oder Ovale handelt. Vor allem bei Bohrungen kleineren Durchmessers, kleiner als 30 mm, hat sich eine glättende und verfestigende spanlose Bearbeitung bislang als schwierig oder nicht durchführbar erwiesen.

Im Hinblick hierauf liegt der Erfindung die Aufgabe zugrunde, eine Vorrichtung zum Bearbeiten von Oberflächen mittels eines Glättwerkzeuges zur Verfügung zu stellen, die auf eine besonders rationelle Weise die Bearbeitung auch klein dimensionierter Bohrungen mit komplex konturierten Wandteilen ermöglicht.

Erfindungsgemäß ist diese Aufgabe durch eine Vorrichtung gelöst, die die Merkmale des Patentanspruches 1 in seiner Gesamtheit aufweist.

Eine wesentliche Besonderheit der Erfindung besteht demgemäß darin, dass am betreffenden Bearbeitungshalter nicht nur zumindest ein Glättwerkzeug vorhanden ist, sondern der Bearbeitungshalter zusätzlich mit mindestens einem Schneidwerkzeug ausgerüstet ist, das die spanende Formgebung der durch das Glättwerkzeug zu bearbeitenden Oberfläche durchführt. Dies eröffnet die Möglichkeit, den Ablauf des gesamten Fertigungsprozesses, also spanende Erzeugung der Oberfläche und Nachbearbeitung zur Glättung und/oder Verfestigung besonders wirtschaftlich und schnell zu gestalten, indem eine kombinierte spanende Bearbeitung und spanlose Bearbeitung im Zuge eines sozusagen einheitlichen Bearbeitungsvorganges durchgeführt wird. Hierbei kann beispielsweise so vorgegangen werden, dass im Zuge einer Vorschubbewegung in Vorwärtsrichtung durch gesteuertes Auslenken des Bearbeitungshalters das Schneidwerkzeug in Bearbeitungseingriff ist und durch spanende Bearbeitung die gewünschte Oberflächenkontur erzeugt. Danach wird der Bearbeitungshalter so ausgelenkt, dass das Glättwerkzeug zum Eingriff gelangt und die Oberflächenkontur nunmehr geglättet wird, wobei diese Bearbeitung durch in Rückwärtsrichtung erfolgende Vorschubbewegung oder auch mit in Vorwärtsrichtung erfolgender Vorschubbewegung erfolgen kann.

Bei vorteilhaften Ausführungsbeispielen können Schneidwerkzeug und Glättwerkzeug am Bearbeitungshalter axial zueinander versetzt angeordnet sein. Dies eröffnet die Möglichkeit, in einem einzigen Arbeitsgang durch gesteuertes Auslenken des Schneidwerkzeuges die Rotationsfläche mit gewünschter Kontur zu erzeugen und mit fortgesetzter Vorschubbewegung die zuvor erzeugte Kontur mittels des Glättwerkzeuges zu glätten.

Alternativ können Schneidwerkzeug und Glättwerkzeug am Bearbeitungshalter in Umfangsrichtung zueinander versetzt angeordnet sein. Wenn hierbei die Anordnung so getroffen ist, dass Schneidwerkzeug und Glättwerkzeug zueinander diametral versetzt angeordnet sind, kann die Auslenkung des Bearbeitungshalters in einer Auslenkungs- oder Zustellebene erfolgen, nämlich indem das Schneidwerkzeug zur spanenden Bearbeitung zur einen Seite während einer Vorschubbewegung ausgelenkt wird und für die spanlose Bearbeitung der Bearbeitungshalter in die entgegengesetzte Richtung ausgelenkt wird, wobei Spanen und Glätten in gleicher oder zueinander entgegengesetzter Vorschubrichtung erfolgen können.

Vorzugsweise sind Schneidwerkzeug und Glättwerkzeug am Bearbeitungshalter radial einstellbar angeordnet.

Bei Ausführungsbeispielen, bei denen das Glättwerkzeug am Bearbeitungshalter radial unbewegbar gelagert ist, wird die Größe der Anpresskraft für die spanlose Bearbeitung durch die Auslenkung des Glättwerkzeuges definiert.

Die Anordnung kann jedoch auch so getroffen sein, dass das Glättwerkzeug am Bearbeitungshalter federnd gelagert ist.

Für die Auslenkung des Bearbeitungshalters gegenüber der Vorschubrichtung kann der Bearbeitungshalter durch eine senkrecht zur Vorschubrichtung verlaufende Zustellbewegung auslenkbar oder gegenüber der Vorschubrichtung um wählbare Neigungswinkel auslenkbar sein.

Im letztgenannten Fall kann die Anordnung so getroffen sein, dass der Bearbeitungshalter mit einem Träger verbunden ist, der in einer drehbaren Maschinenspindel relativ zu deren Drehachse mittels einer zwischen Spindel und Träger wirksamen, an sich bekannten Neigungseinstelleinrichtung in vorgegebene Auslenkungswinkel relativ zur Drehachse lageeinstellbar ist.

Bei einer federnden Anordnung des Glättelementes am Bearbeitungshalter können mechanische Federelemente vorgesehen sein oder das Glättwerkzeug kann am Bearbeitungshalter hydrostatisch abgestützt sein, wobei durch entsprechende Auslegung des Hydrauliksystemes das Federungsverhalten und durch Wahl des Betriebsdruckes die Anpresskraft bestimmt werden können.

Als Glättwerkzeug kann mit besonderem Vorteil ein Glättdiamant zum Einsatz kommen.

Nachstehend ist die Erfindung anhand von in der Zeichnung dargestellten Ausführungsbeispielen im Einzelnen erläutert. Es zeigen:
- Fig. 1: eine annähernd in natürlichem Maßstab und schematisch vereinfacht gezeichnete Seitenansicht eines Ausführungsbeispieles der erfindungsgemäßen Vorrichtung, wobei ein Betriebszustand dargestellt ist, bei dem eine Schneide in spanendem Bearbeitungseingriff mit einem Werkstück ist;
- Fig. 2: eine der Fig. 1 entsprechende Seitenansicht, wobei ein Betriebszustand dargestellt ist, bei dem ein Glättwerkzeug in glättendem und/oder verfestigendem Bearbeitungseingriff mit dem Werkstück ist;
- Fig. 3: eine gegenüber Fig. 1 und 2 leicht vergrößert gezeichnete Draufsicht lediglich des Bearbeitungshalters;
- Fig. 4: eine Seitenansicht des Bearbeitungshalters von Fig. 3, im Lagerungsbereich des Glättwerkzeuges teilweise entsprechend der Schnittlinie IV-IV von Fig. 3 aufgeschnitten gezeichnet;
- Fig. 5: eine der Fig. 4 entsprechende Darstellung, die ein abgewandeltes Beispiel der Lagerung des Glättwerkzeuges zeigt;
- Fig. 6 und 7: schematisch vereinfacht gezeichnete Seitenansichten eines weitere Ausführungsbeispieles, wobei eine Schneide in spanendem Bearbeitungseingriff mit einem Werkstück bzw. ein Glättwerkzeug in Bearbeitungseingriff mit dem Werkstück dargestellt ist;
- Fig. 8: eine Draufsicht nur des Bearbeitungshalters eines weiteren Ausführungsbeispieles;
- Fig. 9: eine Seitenansicht des Bearbeitungshalters von Fig. 8, im Bereich der Lagerung des Glättwerkzeuges teilweise entsprechend der Schnittlinie IX-IX von Fig. 8 aufgeschnitten;
- Fig. 10 und 11: ein den Bearbeitungshalter von Fig. 8 und 9 aufweisendes Ausführungsbeispiel, wobei die Schneide in spanendem Bearbeitungseingriff bzw. ein Glättwerkzeug in glättendem und/oder verfestigendem Bearbeitungseingriff mit dem Werkstück ist;
- Fig. 12 und 13: den Fig. 10 und 11 entsprechende Darstellungen eines abgewandelten Ausführungsbeispieles;
- Fig. 14 und 15: eine Draufsicht bzw. Seitenansicht eines weiteren Beispieles des Bearbeitungshalters, in Fig. 15 teilweise aufgeschnitten entsprechend der Schnittlinie XV-XV von Fig. 14;
- Fig. 16 und 17: das den Bearbeitungshalter gemäß Fig. 14 und 15 aufweisende Ausführungsbeispiel, wobei ein Betriebszustand gezeigt ist, bei dem eine Schneide in Bearbeitungseingriff mit einem Werkstück ist, bzw. ein Betriebszustand gezeigt ist, bei dem ein Glättwerkzeug in Bearbeitungseingriff mit dem Werkstück ist;
- Fig. 18: eine Draufsicht nur des Bearbeitungshalters eines weiteren Ausführungsbeispieles;
- Fig. 19: eine teilweise entsprechend der Schnittlinie IXX-IXX von Fig. 18 aufgeschnittene Seitenansicht dieses Bearbeitungshalters;
- Fig. 20: eine gegenüber Fig. 19 vergrößert gezeichnete Detaildarstellung des in Fig. 19 mit XX gezeichneten Bezirkes;
- Fig. 21: eine Draufsicht lediglich des Bearbeitungshalters eines weiteren Ausführungsbeispieles;
- Fig. 22: eine teilweise entsprechend der Linie XXII-XXII von Fig. 21 aufgeschnittene Seitenansicht des Bearbeitungshalters;
- Fig. 23: eine schematisierte Seitenansicht des den Bearbeitungshalter gemäß Fig. 21 und 22 aufweisenden Ausführungsbeispieles, wobei sowohl eine Schneide als auch ein Glättwerkzeug in Bearbeitungseingriff mit einem Werkstück sind;
- Fig. 24: eine Vorderansicht nur des Bearbeitungshalters eines weiteren Ausführungsbeispieles;
- Fig. 25: eine Seitenansicht des Bearbeitungshalters von Fig. 24, teilweise aufgeschnitten entsprechend der Schnittlinie XXV-XXV von Fig. 24;
- Fig. 26: eine schematisch vereinfacht gezeichnete Seitenansicht eines den Bearbeitungshalter von Fig. 24 und 25 aufweisenden Ausführungsbeispieles, wobei sowohl eine Schneide als auch ein Glättwerkzeug in Bearbeitungseingriff mit einem Werkstück gezeigt sind;
- Fig. 27: eine Vorderansicht des Bearbeitungshalters gemäß einem weiteren Ausführungsbeispiel;
- Fig. 28: eine Draufsicht des Bearbeitungshalters von Fig. 27;
- Fig. 29: eine teilweise entsprechend der Schnittlinie IXXX-IXXX von Fig. 27 aufgeschnittene Seitenansicht des Bearbeitungshalters und
- Fig. 30 und 31: schematisierte Seitenansichten der den Bearbeitungshalter von Fig. 27 bis 29 aufweisenden Vorrichtung, wobei der Betriebszustand gezeigt ist, bei dem sich eine Schneide in Bearbeitungseingriff befindet bzw. ein Betriebszustand, bei dem sich ein Glättwerkzeug in Bearbeitungseingriff mit dem Werkstück befindet.

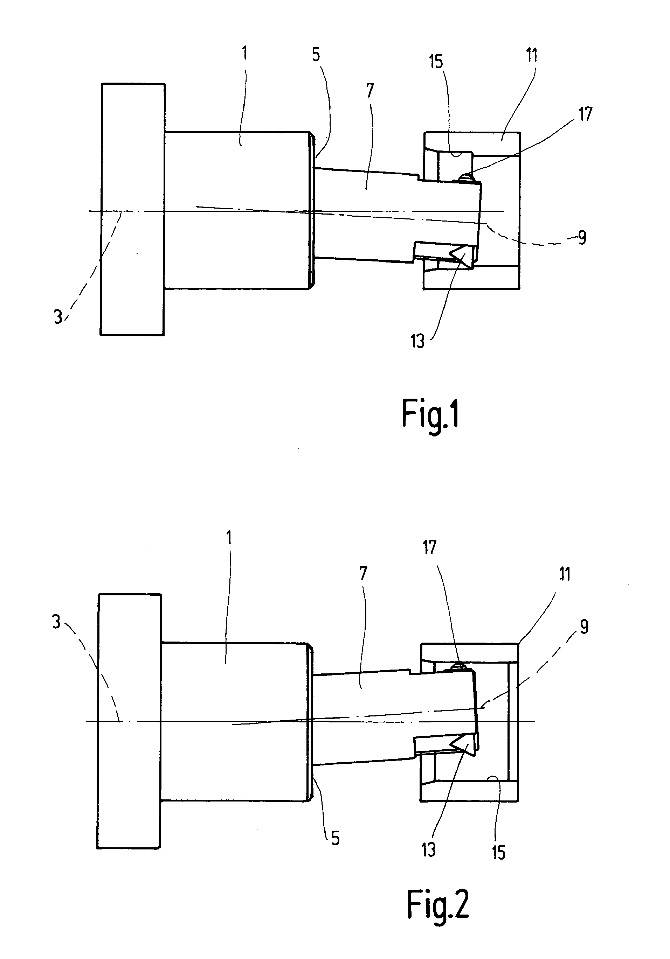

In Fig. 1 und 2 ist das in einer Vorschubrichtung verfahrbare Endteil einer nicht dargestellten, drehbaren Maschinenspindel mit 1 bezeichnet. Die Vorschubrichtung entspricht der mit 3 bezeichneten Drehachse der Maschinenspindel. Das Endteil 1 der Maschinenspindel ist als ein an der Stirnfläche 5 offener Hohlkörper gestaltet, wobei im Innenraum des Endteiles 1 ein nicht gezeigter Träger angeordnet ist, der mit einer ebenfalls nicht gezeigten, an sich bekannten Neigungseinstelleinrichtung verbunden ist. Aus der Öffnung der Stirnfläche 5 des Endteiles 1 heraus erstreckt sich ein Bearbeitungshalter 7, der einen Fortsatz des Trägers bildet. Durch ein mittels der Neigungseinstelleinrichtung bewirktes Neigen des Trägers relativ zur Vorschubrichtung und zur Drehachse 3 ist daher der Bearbeitungshalter 7 um Neigungswinkel in der Weise auslenkbar, wie dies aus dem Vergleich der Fig. 1 und 2 entnehmbar ist. Wie gezeigt, ist dabei die Längsachse 9 des Bearbeitungshalters 7 bei dem Betriebszustand von Fig. 1 gegenüber der Drehachse 3 in der Fig. nach unten um einen Neigungswinkel ausgelenkt, während bei dem in Fig. 2 gezeigten Betriebszustand sich die Längsachse 9 des Bearbeitungshalters 7 oberhalb der Drehachse 3 befindet.

Fig. 1 zeigt den Betriebszustand der spanenden Bearbeitung einer Bohrung in einem stationär gehaltenen Werkstück 11. Wie ersichtlich, ist der Bearbeitungshalter 7 so ausgelenkt, dass ein am Stirnbereich des Bearbeitungshalters 7 in üblicher Weise einstellbar angebrachter Schneideinsatz 13 im Zuge einer entlang der Drehachse 3 erfolgenden Vorschubbewegung eine spanende Bearbeitung durchführt, so dass in der Bohrung des Werkstückes 11 ein bearbeitetes Wandteil 15 gebildet wird. Außer dem Schneideinsatz 13 befindet sich am Bearbeitungshalter 7 ein Glättwerkzeug, bei dem es sich beim gezeigten Beispiel um einen Glättdiamanten 17 handelt, welcher beim vorliegenden Beispiel zu dem Schneideinsatz 13 diametral entgegengesetzt angeordnet ist.

Fig. 2 zeigt den Betriebszustand des Glättens und Verfestigens des zuvor spanend bearbeiteten Wandteiles 15, wobei in Fig. 2 zu ersehen ist, dass durch Änderung der Auslenkung in der Fig. nach oben der Glättdiamant 17 in Bearbeitungseingriff mit dem Wandteil 15 gebracht ist. Während in einer in Vorwärtsrichtung verlaufenden Vorschubbewegung (nach rechts entsprechend Fig. 1) die spanende Bearbeitung des Wandteiles 15 durchgeführt wurde, kann nun, nach Änderung der Auslenkung des Bearbeitungshalters 7, bei rücklaufender Vorschubbewegung der Arbeitsgang des Glättens und Verfestigens durchgeführt werden.

Während des Vorschubes bei der spanenden Bearbeitung kann die Auslenkung messgesteuert geändert werden, so dass durch Zerspanung ein gewünschtes Profil, d. h. eine gewünschte Konturierung am bearbeiteten Wandteil 15 erzeugt wird. Die Benutzung eines Glättdiamanten 17 als Glättwerkzeug ermöglicht es, dass nach erfolgter Änderung der Auslenkung des Bearbeitungshalters 7, im Rücklauf, beim Glättvorgang der Glättdiamant 17 auch feinen Konturierungen folgen kann, so dass eine Glättung und Verfestigung auch bei komplexen Geometrien der Innenwand von Bohrungen ermöglicht ist.

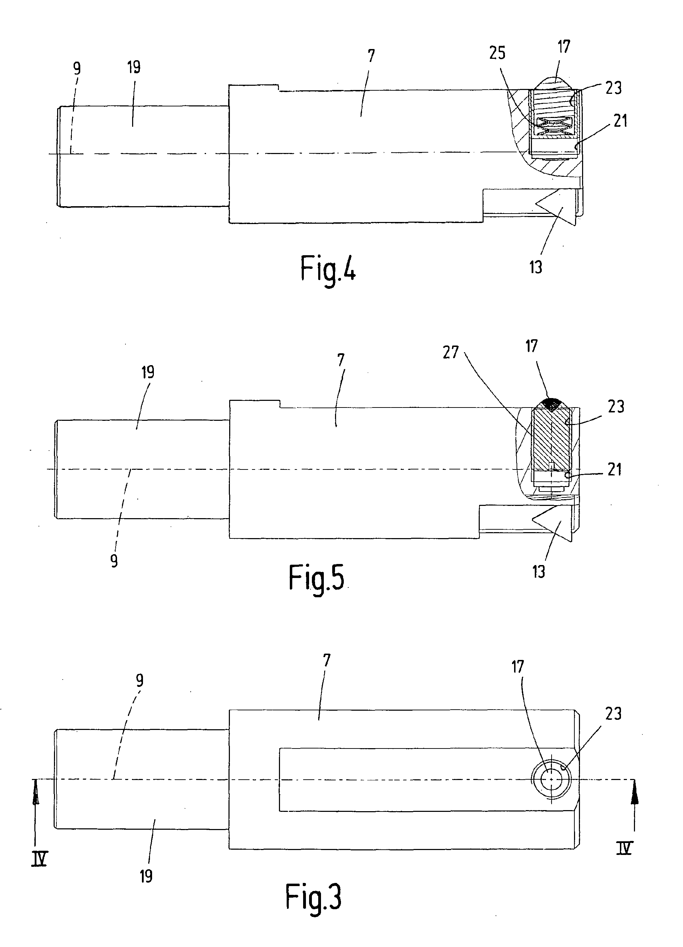

Fig. 3 und 4 zeigen den mit seinem zugehörigen Träger 19 verbundenen Bearbeitungshalter 7 in einer vorteilhaften Ausführungsform, wobei der Glättdiamant 17 im Bearbeitungshalter 7 in einem speziell gestalteten Sitz 21 aufgenommen ist. Im Sitz 21 befindet sich eine in Radialrichtung lageeinstellbare Lagerungshülse 23. Am Boden der Hülse 23 befindet sich eine Federanordnung aus Tellerfedern 25, die am Glättdiamant 17 eine radial nach außen wirkende Vorspannung erzeugen. Dadurch, dass der Glättdiamant 17 auf diese Weise gegen starke Federkraft radial nachgiebig gelagert ist, eröffnet sich die Möglichkeit, gegebenenfalls beim Zerspanungsvorgang erzeugte Fertigungstoleranzen auszugleichen. Anstelle der Federanordnung aus Tellerfedern 25 kann bei einer nicht näher dargestellten Ausführungsform auch ein anderer Energiespeicher eingesetzt werden, sei es in Form anderer Federelemente, sei es in Form eines Elastomermaterials oder einer hydraulischen Abstützung.

Wie Fig. 5 zeigt, kann anstelle einer federnden Anordnung des Glättdiamanten 17 ein starrer Einbau vorgesehen sein, wobei die Lagerungshülse 23 in eine Gewindebohrung 27 des Bearbeitungshalters 7 eingeschraubt ist und wobei die Verschraubung so ausgelegt sein kann, dass eine radiale Lageeinstellung des Diamanten 17 vorgenommen werden kann. Bei sämtlichen Ausführungsbeispielen kann auch für die Schneide 13 eine radiale Einstellmöglichkeit vorgesehen sein, um beispielsweise Fertigungstoleranzen oder Verschleiß auszugleichen.

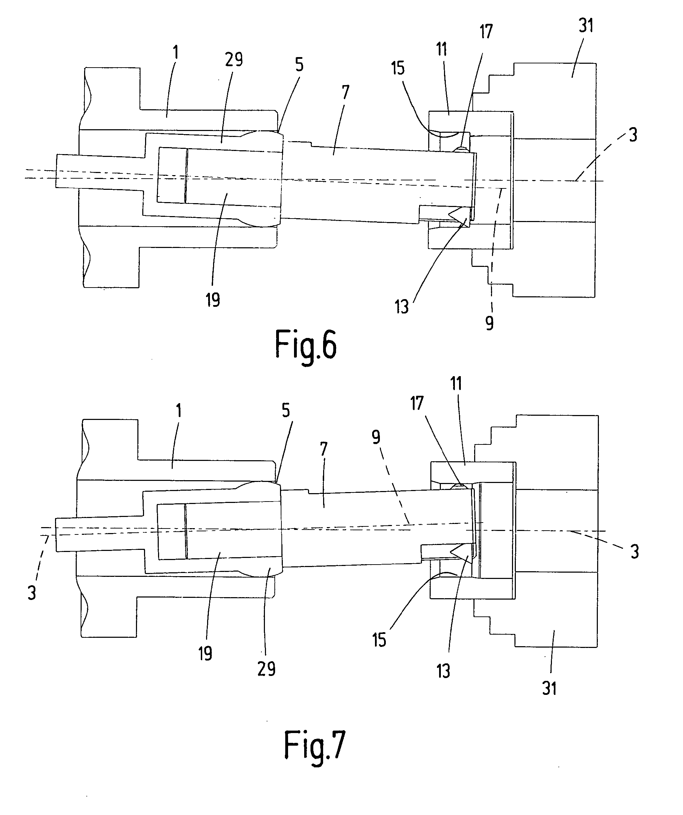

Fig. 6 und 7 verdeutlichen die Benutzung des Bearbeitungshalters 7 von Fig. 4 oder 5. Wie ersichtlich, ist der Träger 19 des Bearbeitungshalters 7 in einer nur schematisiert angedeuteten, an sich bekannten Neigungseinstelleinrichtung 29 aufgenommen, die beim gezeigten Beispiel in einer betreffenden Maschinenspindel 1 gelagert ist. Bei dem Betriebszustand von Fig. 6 ist die Achse 9 des Bearbeitungshalters 7 gegenüber der Vorschubrichtung 3 um einen Neigungswinkel (in Fig. 6 nach unten) ausgelenkt, sodass durch Bearbeitungseingriff der Schneide 13 mit dem Werkstück 11 bei der in Fig. 6 nach rechts erfolgenden Vorschubrichtung die spanende Formgebung des Wandteiles 15 des Werkstückes 11 erfolgt. Nachdem durch spanende Formgebung die gewünschte Kontur des Wandteiles 15 erzeugt ist, wird in einem zweiten Arbeitsgang die zuvor erzeugte Kontur mittels des Glättdiamanten 17 geglättet, der am Bearbeitungshalter 7 gegenüber der Schneide 13 diametral versetzt angeordnet ist. Zu diesem Zweck wird die Auslenkung des Bearbeitungshalters 7 um einen entsprechenden Neigungswinkel (in Fig. 7 nach oben) geändert, sodass der Glättdiamant 17 in Bearbeitungseingriff am Werkstück 11 gelangt. Die Glättbearbeitung kann dabei der Vorschubrichtung der Zerspanung entgegengesetzt erfolgen oder in gleicher Richtung erfolgen. Die Größe der Anpresskraft des Glättdiamanten 17 wird durch die Auslenkung definiert. Beim gezeigten Beispiel wird die Drehbewegung durch Rotation der Maschinenspindel 1 bewirkt. Stattdessen kann auch das Werkstück 11 in einem rotierenden Maschinenteil 31 eingespannt sein. Auslenkung und/oder Vorschubbewegung könnte gleichermaßen auch durch entsprechende Bewegung dieses Maschinenteiles 31 erfolgen.

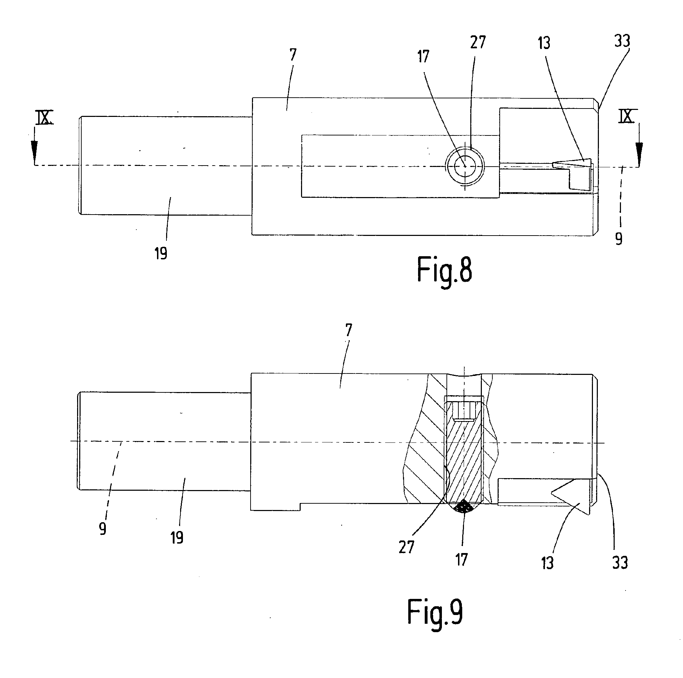

Während bei den zuvor beschriebenen Beispielen Schneide 13 und Glättdiamant 17 am Bearbeitungshalter 7 zueinander diametral entgegengesetzt angeordnet sind, können Schneide 13 und Glättdiamant 17 auch am Bearbeitungshalter 7 in anderer Lagebeziehung angebracht sein, beispielsweise axial zueinander versetzt sein, wie Fig. 8 und 9 verdeutlichen. Wie ersichtlich, ist die Schneide 13, wie bei den zuvor beschriebenen Beispielen, in der Nähe des stirnseitigen Endes 33 des Bearbeitungshalters 7 angeordnet, während der Glättdiamant 17, in der gleichen Axialebene wie die Schneide 13, axial nach rückwärts versetzt ist. Beim Beispiel von Fig. 8 und 9 ist der Glättdiamant 17 wiederum starr, d. h. nicht federnd, jedoch radial lageeinstellbar in einer Gewindebohrung 27 im Bearbeitungshalter 7 gelagert.

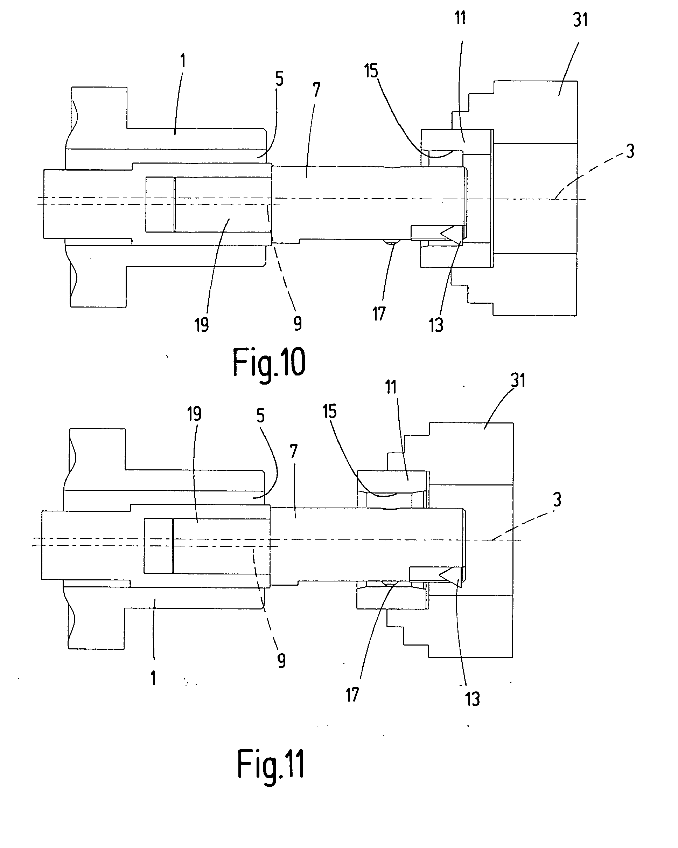

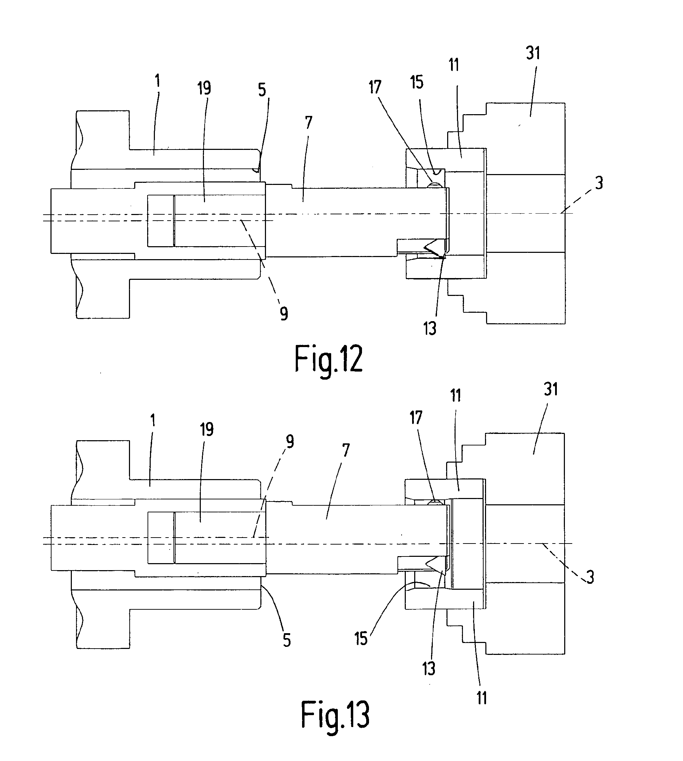

Die Fig. 10 und 11 verdeutlichen, ähnlich wie die Fig. 6 und 7, den Betrieb des betreffenden Bearbeitungshalters 7, und zwar des in Fig. 8 und 9 gezeigten Beispieles. Im Unterschied zu der in Fig. 6 gezeigten Betriebsweise erfolgt die den Bearbeitungseingriff mit dem Werkstück 11 erzeugende Auslenkung nicht durch Neigungseinstellung um einen Neigungswinkel, sondern durch eine zur Vorschubrichtung 3 senkrecht erfolgende Zustellung der Achse 9 . Durch eine derartige Auslenkung wird in einem ersten Arbeitsgang, siehe Fig. 10, das Wandteil 15 spanend geformt. Im gleichen Arbeitsgang wird die zuvor erzeugte Kontur mittels des Diamanten 17 geglättet, wobei bei weiterem Vorschub die Zustellung so gesteuert wird, dass die Kontur ein zweites Mal bearbeitet wird. Die Richtung der Glättbearbeitung ist dabei der Vorschubrichtung der Zerspanung gleich. Die Größe der Anpresskraft wird durch die Auslenkung und die Anordnung des Glättdiamanten 17 (starre Radialeinstellung oder federnde Anordnung) bestimmt.

Fig. 12 und 13 wiederum verdeutlichen die Benutzung eines Bearbeitungshalters 7, bei dem Schneide 13 und Glättdiamant 17 zueinander diametral entgegengesetzt angeordnet sind. Wie bei dem Beispiel von Fig. 10 und 11 erfolgt jedoch die Auslenkung nicht durch Einstellen eines Neigungswinkels, sondern wiederum durch senkrecht zur Vorschubrichtung 3 erfolgende Zustellung der Achse 9. Mit anderen Worten gesagt, erfolgt der Arbeitsablauf ähnlich wie beim Beispiel von Fig. 6 und 7, wobei jedoch anstelle der Auslenkung durch Einstellen eines Neigungswinkels die achsparallele Zustellung in der Weise erfolgt, dass für die spanende Formgebung des Wandteiles entsprechend Fig. 12 in einem ersten Arbeitsgang die Zustellung in einer Richtung (in Fig. 12 nach unten) erfolgt, während für die Glättbearbeitung die Auslenkung durch Zustellen in entgegengesetzter Richtung (in Fig. 13 nach oben) erfolgt. Spanende und glättende Bearbeitung können wiederum in gleicher oder entgegengesetzter Vorschubrichtung erfolgen.

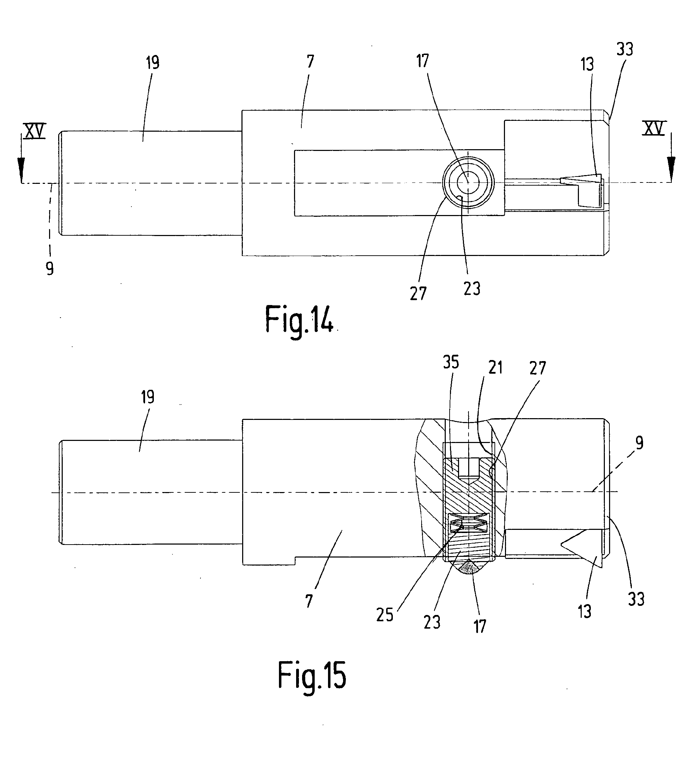

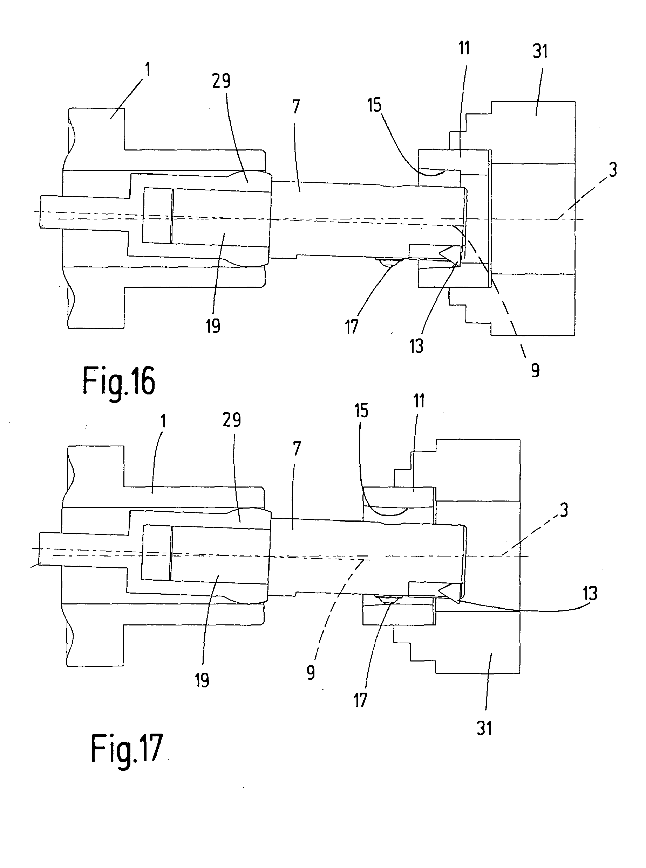

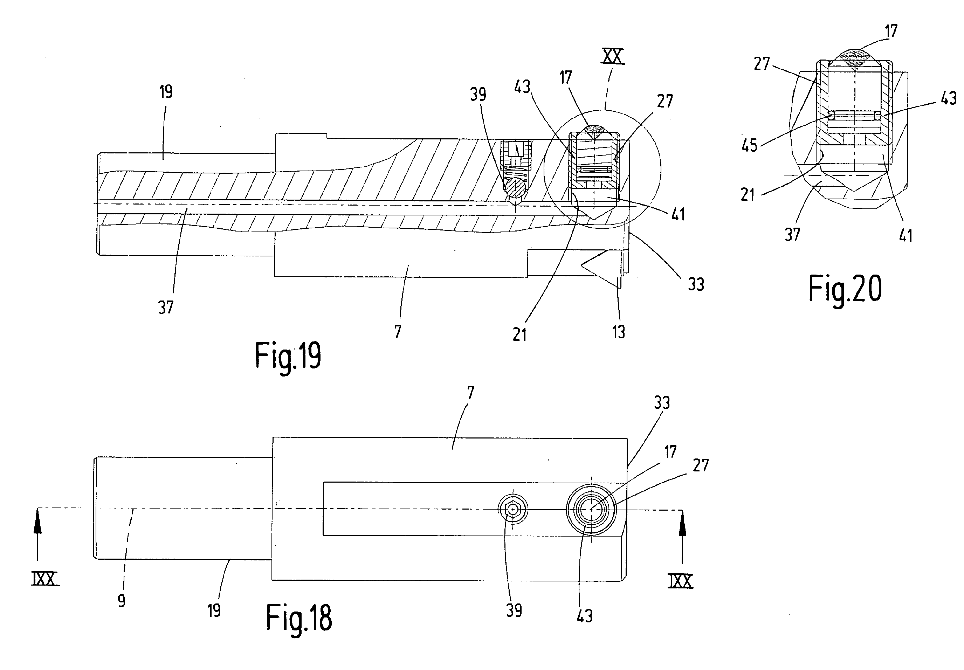

Fig. 14 und 15 verdeutlichen ein weiteres Ausführungsbeispiel, bei dem Schneide 13 und Glättdiamant 17 wiederum axial zueinander versetzt in gleicher, zur Längsachse 9 paralleler Ebene angeordnet sind, wobei jedoch der Glättdiamant 17 sowohl in einer über eine Tellerfederanordnung 25 abgestützten, bewegbaren Lagerungshülse 23 federnd gelagert ist, als auch radial voreinstellbar angeordnet ist, da sich die Tellerfederanordnung 25 an einem in der Gewindebohrung 27 sitzenden Gewindeeinsatz 35 abstützt. Dieses Beispiel des Bearbeitungshalters 7 ist in ähnlicher Weise einsetzbar wie dies in Fig. 10 und 11 gezeigt ist, wobei der Unterschied demgegenüber jedoch darin besteht, dass anstelle der Auslenkung durch achsparallele Zustellung wiederum eine Neigungswinkeleinstellung vorgesehen ist. Demgemäß erfolgt die spanende Formgebung bei einer Auslenkung um einen Neigungswinkel (in Fig. 16 und 17 nach unten) im Zuge einer nach vorn (in Fig. 16 und 17 nach rechts) gerichteten Vorschubbewegung. Im gleichen Arbeitsgang wird die dadurch erzeugte Kontur mittels des Glättdiamanten 17 bei weiter fortgesetztem Vorschub geglättet, wobei der Neigungswinkel der Auslenkung gleich bleiben kann. Die Größe der Anpresskraft des Glättdiamanten 17 wird durch die Auslenkung definiert. Durch die gefederte Anbringung des Glättdiamanten 17 ist dieses Ausführungsbeispiel weniger empfindlich gegenüber Abweichungen der Form bzw. Toleranzen von Maschine und Werkstück 11.

Die Fig. 18 bis 20 beziehen sich wiederum auf ein Ausführungsbeispiel, bei dem am Bearbeitungshalter 7 Schneide 13 und Glättdiamant 17 diametral zueinander entgegengesetzt angeordnet sind, wobei jedoch der Glättdiamant 17 hydrostatisch abgestützt ist. Der Bearbeitungshalter 7 weist einen sich vom Ende des Trägers 19 ausgehend zentral erstreckenden Druckmittelkanal 37 auf, der durch ein Druckbegrenzungsventil 39 abgesichert ist. Der Kanal 37 endet in einem Druckraum 41, siehe insbesondere Fig. 20, der an einen Glättelementhalter 43 angrenzt. Dieser kann starr eingebaut sein oder als Gewindeeinsatz radial voreinstellbar in einer Gewindebohrung 27 sitzen. Innerhalb des Halters 43 ist der Glättdiamant 17, unter Abdichtung mittels eines Dichtelementes 45 hydrostatisch abgestützt. Beim Einsatz dieses Bearbeitungshalters 7 erfolgt das Glätten der zuvor spanend erzeugten Kontur wiederum in einem zweiten Arbeitsgang, wobei die Auslenkung, wiederum durch Ändern eines Neigungswinkels oder durch achsparallele Zustellung, in die gegenüberliegende Richtung geändert und die Kontur glättend bearbeitet wird. Die Richtung der glättenden Bearbeitung kann dabei der Richtung der Zerspanung entgegengesetzt oder gleich sein. Die Größe der Anpresskraft wird durch den Systemdruck des hydraulischen Systems und die Wirkfläche (Kolbenfläche) am Glättdiamanten 17 definiert.

Durch die hydrostatisch gelagerte Anbringung des Glättdiamanten 17 ist dieses Ausführungsbeispiel deutlich weniger empfindlich gegenüber Abweichungen der Form bzw. Toleranzen von Maschine und Werkstück, und es lassen sich, durch entsprechende Hubbewegungen des Glättdiamanten 17, Konturen bearbeiten, ohne die Auslenkung des Werkzeuges zu ändern. Bei geeigneten Konturen, z. B. zylindrische Bohrungen, können die Zerspanung und das Glätten gleichzeitig erfolgen.

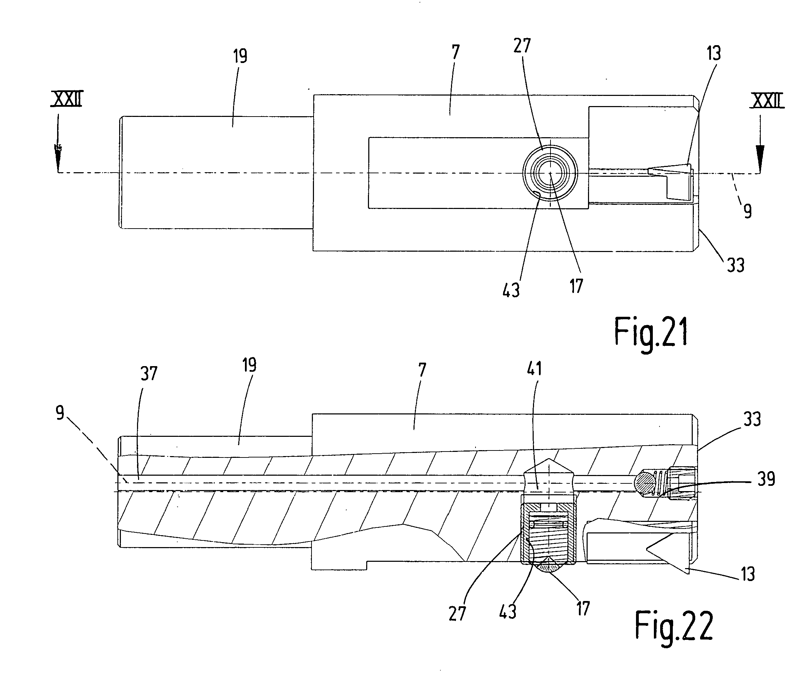

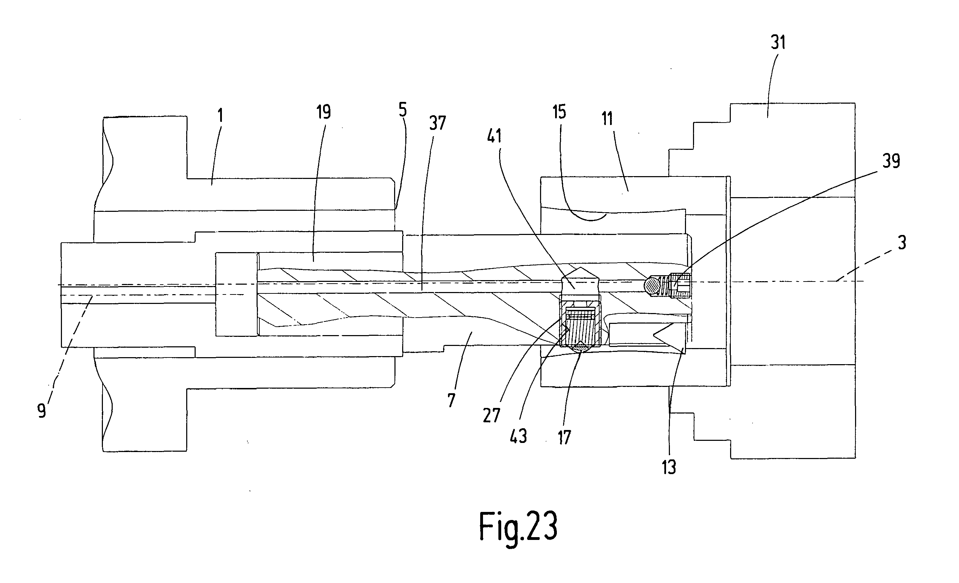

Das Beispiel von Fig. 21 und 22 unterscheidet sich gegenüber Fig. 18 bis 20 lediglich insofern, als der Druckmittelkanal 37 bis in die Nähe des stirnseitigen Endes 33 des Bearbeitungshalters 7 durchgehend ist und an diesem Ende 33 durch das Druckbegrenzungsventil 39 abgeschlossen ist. Der Einsatz des Ausführungsbeispieles gestaltet sich in gleicher Weise wie zuvor beschrieben, wobei, wie in Fig. 23 gezeigt, die Auslenkung durch achsparallele Zustellung erfolgen kann und in einem einzigen Arbeitsgang mit in einer Richtung erfolgenden Vorschubbewegung die Kontur eines Wandteiles 15 spanend erzeugt wird und im Zuge der gleichen Bewegung die Glättbearbeitung erfolgt, siehe Fig. 23.

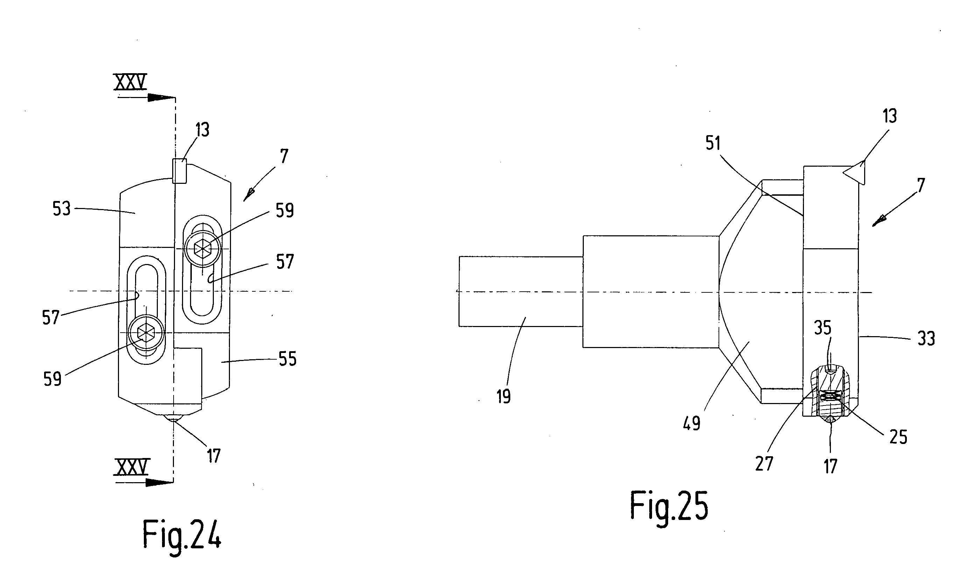

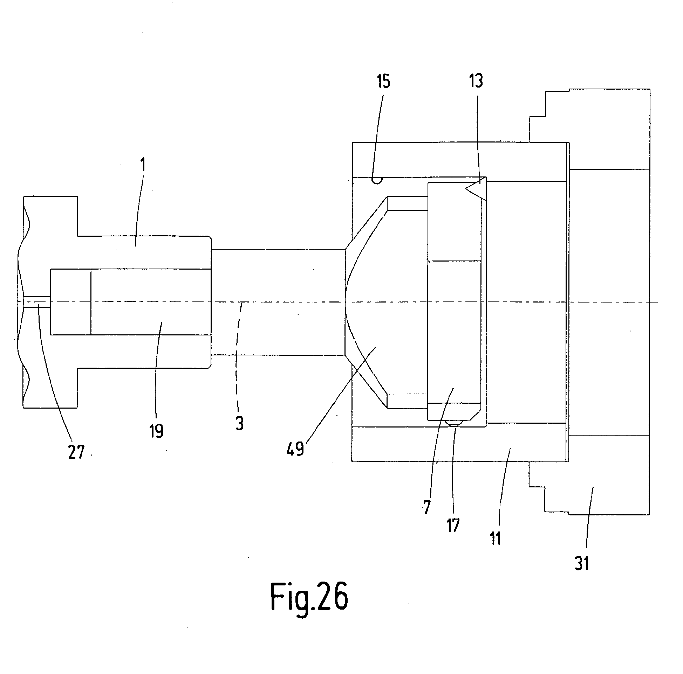

Fig. 24 bis 26 beziehen sich auf ein Ausführungsbeispiel, bei dem am Bearbeitungshalter 7 Schneide 13 und Glättdiamant 17 zueinander diametral entgegengesetzt angeordnet sind, wobei die Schneide 13 über das stirnseitige Ende 33 axial vorstehend angeordnet ist. Der Glättdiamant 17 ist nahe des Endes 33 über eine Tellerfederanordnung 25 federnd und mittels eines Gewindeeinsatzes 35 in der Gewindebohrung 27 radial voreinstellbar gelagert. Anstelle der gezeigten mechanischen Federung könnte der Glättdiamant 17 auch hydrostatisch abgestützt sein. Dieses Ausführungsbeispiel eignet sich besonders zur Erstellung von zylindrischen Bohrungen verhältnismäßig großen Durchmessers, vorzugsweise auf Maschinen mit rotierender Spindel 1 (z. B. Bearbeitungszentrum), wobei die Rotation des Werkzeuges durch die Spindel 1 erfolgt und der Vorschub sowohl durch die Spindel 1 als auch durch das Werkstück 11 erfolgen kann. Bei diesem Beispiel ist der Bearbeitungshalter 7 mit dem der Maschinenspindel 1 zugeordneten Träger 19 nicht unmittelbar verbunden, sondern über einen Zwischenkörper 49. An dessen stirnseitiger Endfläche 51 ist der Bearbeitungshalter 7, der aus zwei plattenartigen Hälften 53 und 55 besteht, gelagert. Die Hälften 53 und 55 des Bearbeitungshalters 7 bilden je einen an der Endfläche 51 geführten Einstellschieber, wobei die Hälfte 53 das den Glättdiamanten 17 tragende Halterteil und die Hälfte 55 das die Schneide 13 tragende Halterteil bilden. Jede Hälfte 53, 55 des Bearbeitungshalters 7 ist zum Zwecke der Auslenkung von Glättdiamant 17 und Schneide 13 längs einer Verschiebeführung 57 in Radialrichtung einstellbar, wobei die Einstellung der Auslenkung durch Spannschrauben 59 festlegbar ist. Wie Fig. 26 zeigt, erfolgt beim Betrieb die Auslenkung nicht durch eine Zustellung seitens der Maschinenspindel 1 oder des im Maschinenteil 31 aufgenommenen Werkstückes 11, sondern die Auslenkung des Bearbeitungshalters 7 erfolgt durch Verschieben der den Bearbeitungshalter 7 bildenden Hälften 53 und 55 am Verbindungskörper 49. Wie Fig. 26 zeigt, wird im gleichen Arbeitsgang die bei der Vorschubbewegung mittels der Schneide 13 erzeugte Kontur am Wandteil 15 mittels des Glättdiamanten 17 geglättet, der zu diesem Zweck radial voreingestellt ist, wobei die Richtung der Glättbearbeitung dabei der Richtung der Zerspanung entspricht. Die Größe der Anpresskraft wird bei hydraulischer Lagerung durch die hydraulischen Gegebenheiten oder bei mechanischer Abfederung durch die Vorspannung der Federanordnung definiert. Eine hydrostatisch gelagerte Ausführung ermöglicht darüber hinaus den Rückzug des Werkzeuges aus der Bohrung im Werkstück 11, ohne die Wand 15 der Bohrung zu berühren, indem vor dem Rückzug der Systemdruck abgeschaltet wird.

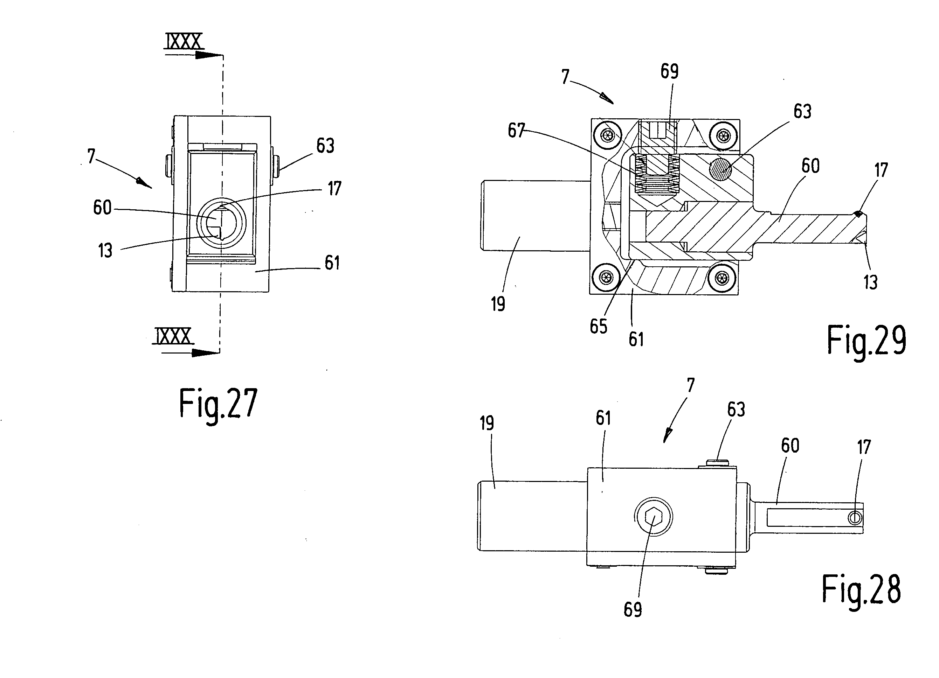

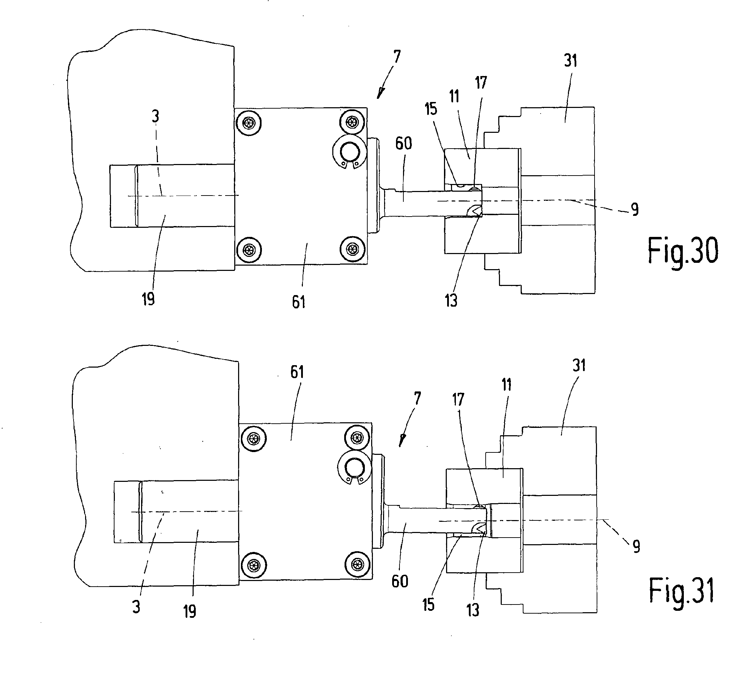

Die Fig. 27 bis 31 verdeutlichen ein Ausführungsbeispiel, bei dem Schneide 13 und Glättdiamant 17 am Bearbeitungshalter 7 wiederum diametral zueinander versetzt angeordnet sind. Wie bei dem zuvor beschriebenen Beispiel ist der Bearbeitungshalter 7 mehrteilig, nämlich bestehend aus einem Werkzeugträger 60, der die eigentliche Halterung von Schneide 13 und Glättdiamant 17 bildet, und einem Gehäuse 61, in dem der Werkzeugträger 60 auf spezielle Weise schwenkbar gelagert ist. Diesbezügliche Einzelheiten sind insbesondere aus Fig. 29 ersichtlich. Wie dort gezeigt, ist der Werkzeugträger 60 um eine Drehachse 63 schwenkbar, und zwar lediglich in einer bezüglich Fig. 29 im Uhrzeigersinn erfolgenden Schwenkrichtung, wobei sich die schwenkbare Anordnung von einem Festanschlag 65 weg gegen die Wirkung einer Federanordnung 67 im Uhrzeigersinn bewegt. Die Vorspannkraft der Federanordnung 67 ist durch einen Gewindeeinsatz 69 einstellbar.

Bei der Benutzung befindet sich die Schneide 13 dank des Festanschlages 65, der ein radial nach innen Schwenken der Schneide 13 verhindert, starr in der Bearbeitungsposition entsprechend der Auslenkung des Bearbeitungshalters 7. Das Glättwerkzeug 17 hingegen kommt mit dem betreffenden Werkstück 11 in abgefederten Bearbeitungseingriff, da eine durch die Federanordnung 67 abgefederte Schwenkbewegung um die Achse 63 erfolgen kann.

Die Bearbeitung kann in zwei Arbeitsgängen erfolgen, wobei zunächst durch die Schneide 13 entsprechend der Auslenkung des Bearbeitungshalters 7 die Kontur des Wandteiles 15 durch Spanen erzeugt wird. Im zweiten Arbeitsgang wird mittels des Glättdiamanten 17 die zuvor erzeugte Kontur geglättet, nachdem die Auslenkung des Bearbeitungshalters 7 in die entgegengesetzte Richtung vorgenommen wurde, wobei die Richtung der Glättbearbeitung dabei der Richtung der Zerspanung entgegengesetzt oder gleich sein kann. Die Größe der Anpresskraft beim Glätten wird durch die Auslenkung des Bearbeitungshalters 7 definiert, wobei die gefederte Anbringung des Glättdiamanten 17 bei diesem Ausführungsbeispiel die Empfindlichkeit gegenüber Abweichungen der Form bzw. Toleranzen von Maschine und Werkstück verringert.

## Patentansprüche

1. Vorrichtung zum Bearbeiten von Oberflächen eines Werkstückes (11) mittels mindestens eines Glättwerkzeuges (17), das von einem Bearbeitungshalter (7) getragen ist, welcher für die bei einer relativen Drehbewegung zwischen Werkstück (11) und Bearbeitungshalter (7) erfolgende Oberflächenbearbeitung gegenüber einer vorgebbaren Vorschubrichtung (3) auslenkbar ist, **dadurch gekennzeichnet, dass** am Bearbeitungshalter (7) außer dem Glättwerkzeug (17) mindestens ein Schneidwerkzeug (13) zur spanenden Formgebung der durch das Glättwerkzeug (17) zu bearbeitenden Oberfläche (15) vorhanden ist.

2. Vorrichtung nach Anspruch 1, **dadurch gekennzeichnet, dass** Schneidwerkzeug (13) und Glättwerkzeug (17) am Bearbeitungshalter (7) axial zueinander versetzt angeordnet sind.

3. Vorrichtung nach Anspruch 1 oder 2, **dadurch gekennzeichnet, dass** Schneidwerkzeug (13) und Glättwerkzeug (17) am Bearbeitungshalter (7) in Umfangsrichtung zueinander versetzt angeordnet sind.

4. Vorrichtung nach Anspruch 3, **dadurch gekennzeichnet, dass** Schneidwerkzeug (13) und Glättwerkzeug (17) zueinander diametral versetzt angeordnet sind.

5. Vorrichtung nach einem der Ansprüche 1 bis 4, **dadurch gekennzeichnet, dass** Schneidwerkzeug (13) und Glättwerkzeug (17) am Bearbeitungshalter (7) radial einstellbar angeordnet sind.

6. Vorrichtung nach einem der Ansprüche 1 bis 5, **dadurch gekennzeichnet, dass** das am Bearbeitungshalter (7) gegebenenfalls radial voreingestellte Glättwerkzeug (17) am Bearbeitungshalter (7) starr gelagert ist.

7. Vorrichtung nach einem der Ansprüche 1 bis 5, **dadurch gekennzeichnet, dass** das Glättwerkzeug (17) am Bearbeitungshalter (7) federnd gelagert ist.

8. Vorrichtung nach einem der Ansprüche 1 bis 7, **dadurch gekennzeichnet, dass** der Bearbeitungshalter (7) gegenüber der Vorschubrichtung (3) um wählbare Neigungswinkel auslenkbar ist.

9. Vorrichtung nach einem der Ansprüche 1 bis 7, **dadurch gekennzeichnet, dass** der Bearbeitungshalter (7) durch eine senkrecht zur Vorschubrichtung (3) verlaufende Zustellbewegung auslenkbar ist.

10. Vorrichtung nach Anspruch 8, **dadurch gekennzeichnet, dass** der Bearbeitungshalter (7) mit einem Träger (19) verbunden ist, der in einer drehbaren Maschinenspindel (1) relativ zu deren Drehachse (3) mittels einer zwischen Spindel (1) und Träger (19) wirksamen, an sich bekannten Neigungseinstellung (29) in vorgegebene Auslenkungswinkel relativ zur Drehachse (3) lageeinstellbar ist.

11. Vorrichtung nach einem der Ansprüche 5 bis 10, **dadurch gekennzeichnet, dass** das Glättwerkzeug (17) am Bearbeitungshalter (7) hydrostatisch abgestützt ist.

12. Vorrichtung nach einem der Ansprüche 5 bis 10, **dadurch gekennzeichnet, dass** das Glättwerkzeug (17) an einem Werkzeughalter (60) fest eingebaut ist, der am Bearbeitungshalter (7) gegen Federkraft (67) in nur einer Richtung schwenkbar ist.

13. Vorrichtung nach einem der Ansprüche 1 bis 12, **dadurch gekennzeichnet, dass** zumindest ein Glättdiamant (17) als Glättwerkzeug vorgesehen ist.
